# EUROPÄISCHE PATENTSCHRIFT

(11) **EP 0 905 846 B1**
(45) Veröffentlichungstag und Bekanntmachung des Hinweises auf die Patenterteilung: **27.04.2011**
(21) Anmeldenummer: 98250344.3
(22) Anmeldetag: 25.09.1998
(51) Int. Cl.: H02H 3/04, H02H 3/093

(54) **Elektronische Überstrom-Auslöseeinrichtungen**
Electronic overcurrent trip device
Dispositif électronique de déclenchement contre les surintensités

(30) Priorität: 30.09.1997 DE 19744206
(43) Veröffentlichungstag der Anmeldung: 31.03.1999
(73) Patentinhaber: SIEMENS AKTIENGESELLSCHAFT, 80333 München (DE)
(72) Erfinder: Ette, Bernd, 15528 Mönchwinkel (DE); Rehaag, Hans, 16341 Zepernick (DE); Schust, Peter, 12683 Berlin (DE); Pancke, Andreas, 13507 Berlin (DE)

(56) Entgegenhaltungen:
- EP-A- 0 226 530
- US-A- 5 220 478

## Beschreibung

Die Erfindung betrifft elektronische Überstrom-Auslöseeinrichtungen zur Energieversorgung und -verteilung, insbesondere für Nieder- und Mittelspannungs-Schaltanlagen, mit Betriebszustands-Erkennungseinrichtungen zur Steuerung des verzögerten und des unverzögerten Kurzschlußschutzes sowie zur Steuerung des Überlastschutzes.

Elektronische Überstrom-Auslöseeinrichtungen der eingangs definierten Art sind bekannt. Während die unverzögerte Auslösung der Überstrom-Auslöseeinrichtungen bei einem auftretenden Kurzschlußstrom sofort zur Abschaltung der Versorgungsenergie der Schaltanlagen führt, kann die Auslösezeit bei kurz verzögerter Auslösung mehrere Sekunden betragen, bis die Energieversorgung für die jeweils defekte Schaltanlage abgeschaltet ist. Im Zustand der Auslösung bei sogenannter Überlast kann die Auslösezeit sogar bis zu zwei Stunden andauern. Derzeit erhält der Anlagenbetreiber bei Überlast lediglich die Information, daß sich die entsprechende Schaltanlage im Überlastzustand befindet.

Aus der EP-A-0 226 530 ist bereits ein Leistungsschalter für Niederspannung bekannt, der eine Auslöseeinheit mit einem Mikroprozessor aufweist und mit einer Anzeigeeinheit ausgestattet ist, um unterschiedliche Betriebszustände des Leistungsschalters anzuzeigen. Die erkannten Betriebszustände werden vom Mikroprozessor in Form von logischen Signalen ausgegeben und in Form von zwei Buchstaben angezeigt, die nach erfolgter Auslösung stetig leuchten. Bei verzögerter Auslösung blinken die beiden Buchstaben während des Ablaufes der vom Mikroprozessor ermittelten Verzögerungszeit.

Aus der US-A-5 220 478 ist weiter eine Überlast-Auslöseeinrichtung bekannt, welche Informationen über die Erwärmung eines Motors mittels eine Relais-Systems anzeigt. Die Anzeige wird von einem programmierbaren Mikroprozessor gesteuert, welcher entsprechende Signale für die Anzeige erzeugt und abgibt. Der Mikroprozessor ist so ausgebildet, dass er die verbleibende Zeit bis zum Auslösen und die verbleibende Zeit bis zum Zurücksetzen nach einem Auslösen berechnen kann.

Die Aufgabe der Erfindung besteht darin, einen Betreiber in die Lage zu versetzen, die in einer Schaltanlage zur Verfügung stehende Energie besser ausnutzen zu können.

Erfindungsgemäß wird dies durch die Merkmale
2.1 das Zeitstellsignal (ZS) und das Betriebszustandssignal (BS) werden von der jeweiligen Datenanzeige- und -auswerteeinrichtung (DA) alphanumerisch angezeigt,
2.2 das Zeitstellsignal (ZS) und das Betriebszustandssignal (BS) werden von der jeweiligen Datenanzeige- und -auswerteeinrichtung (DA) voneinander getrennt abgebildet,
erreicht.

Mit dem Vorsehen der Datenanzeige- und -auswerteeinrichtung innerhalb der jeweiligen Überstrom-Auslöseeinrichtung ist es dem Schaltanlagenbetreiber jederzeit möglich, sich über den genauen Zustand der Schaltanlage zu informieren. Mit dem von der Belastung des Energieversorgungsnetzes abgeleiteten Meßsignal errechnet die Mikroprozessoreinrichtung der Betriebszustands-Erkennungseinrichtung zum dem jeweils herrschenden Schaltanlagenzustand das Zeitstellsignal und das Betriebszustandssignal. Das Zeitstellsignal gibt dem Schaltanlagenbetreiber beispielsweise die Zeit an, bei der beim derzeitig vorliegenden Belastungsfall des Energieversorgungsnetzes die Abschaltung der Schaltanlage erfolgen wird. Bei dem Betriebszustandssignal ist zwischen dem Zustand "Kurzschlußstrom" und dem Zustand "Überlast" zu unterscheiden. Wie bereits eingangs erwähnt, wird im Bereich des Zustands "Kurzschlußstrom" zwischen der verzögerten und zwischen der unverzögerten Abschaltung unterschieden. Der Schaltanlagenbetreiber hat somit sowohl bei der verzögerten Auslösung als auch im Fall einer Überlast die Möglichkeit, zur Abwendung von Schäden vorab entsprechende Schaltvorgänge in Gang zusetzen. Dem Anlagenbetreiber wird damit der jeweilige Betriebszustand der Schaltanlage in unverschlüsselter Form übermittelt, so daß ohne Zeitverzug ein effektives Energiemanagement in Gang gesetzt werden kann.

Gemäß einer vorteilhaften Ausgestaltung der Erfindung sind die Merkmale
3.1 die Datenanzeige- und -auswerteeinrichtungen sind über einen Datenbus ansteuerbar,
3.2 die Überstrom-Auslöseeinrichtungen sind über den Datenbus ansteuerbar,
vorgesehen.

Die Ansteuerung der Datenanzeige- und -auswerteeinrichtung und der Überstrom-Auslöseeinrichtung über den Datenbus ermöglicht sowohl die zentrale Steuerung über eine beiden gemeinsam zugeordnete Schaltwarte als auch die dezentrale Beeinflussung über entsprechende Rechner innerhalb der jeweiligen Schaltanlage. Im Zusammenhang mit der zentralen Steuerung von einer übergeordneten Schaltwarte aus, können entsprechend der Lastzustände im Energieversorgungsnetz im Überlastzustand einer oder mehrere Überstrom-Auslöseeinrichtungen aus Sichergründen auch nicht im Überlastzustand befindliche Überstrom-Auslöseeinrichtungen ausgelöst werden. Mit diesen Schaltvorgängen lassen sich besonders gefährdete Verbraucher im Energieversorgungsnetz schützen.

Die Erfindung wird durch ein dargestelltes Ausführungsbeispiel näher erläutert, in dem lediglich die zum Verständnis der Erfindung wesentlichen Schalteinrichtungen teilweise als Blockschaltbild dargestellt sind.

Das Ausführungsbeispiel zeigt das Schaltfeld SF, in dem sich die Leistungsschalter befinden, die die Energieversorgung über die Sammelschiene SS schaltbar steuern. Der besseren Übersicht wegen ist lediglich ein nicht bezeichneter Leistungsschalter dargestellt, der mit der Wandlereinrichtung WA in Verbindung steht.Die Wandlereinrichtungen, auch hier ist nur eine einzige Wandlereinrichtung WA dargestellt, stellen einerseits das von der Belastung des jeweiligen Energieversorgungsnetzes abhängige Meßsignal MS zur Verfügung und versorgen andererseits die Überstrom-Auslöseeinrichtungen mit den notwendigen Betriebsspannungen.

Innerhalb der Überstrom-Auslöseeinrichtung UA ist die Datenanzeige- und -auswerteeinrichtung DA positioniert, die neben dem Auslösezustand AZ auch das Zeitstellsignal ZS... in Stunden, Minuten und Sekunden "hh, mm, ss" anzeigt. Die Steuerung der Datenanzeige- und -auswerteeinrichtung DA durch die Betriebszustands-Erkennungseinrichtung BE erfolgt über die dort vorgesehene Mikroprozessoreinrichtung MP. Die Mikroprozessoreinrichtung MP errechnet aus dem von der Belastung des Energieversorgungsnetzes abgeleitete Meßsignal MS das Zeitstellsignal ZS ... und das Betriebszustandssignal BS, die beide zur Steuerung der Datenanzeige- und -auswerteeinrichtung DA der Überstrom-Auslöseeinrichtung UA mitgeteilt werden.

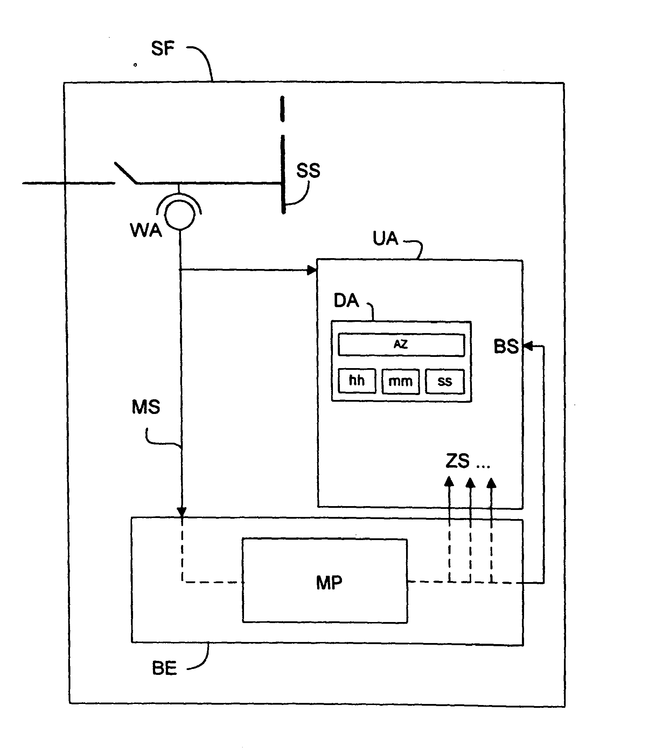

## Patentansprüche

1. Elektronische Überstrom-Auslöseeinrichtungen zur Energieversorgung und -verteilung, insbesondere für Nieder- und Mittelspannungs-Schaltanlagen, mit Betriebszustands-Erkennungseinrichtungen zur Steuerung des verzögerten und des unverzögerten Kurzschlußschutzes sowie zur Steuerung des Überlastschutzes, wobei
1.1 die Überstrom-Auslöseeinrichtungen (UA) sind jeweils mit einer Datenanzeige- und -auswerteeinrichtung (DA) ausgestattet,
1.2 die Datenanzeige- und -auswerteeinrichtung (DA) steht derart unter dem Steuereinfluß der jeweiligen Betriebszustands-Erkennungseinrichtung (BE), daß mittels eines von der Belastung des jeweiligen Energieversorgungsnetzes abgeleiteten Meßsignals (MS) mittels einer Mikroprozessoreinrichtung (MP) ein Zeitstellsignal (ZS) und ein Betriebszustandssignal (BS) an die jeweilige Datenanzeige- und -auswerteeinrichtung (DA) übertragbar ist,
1.3 das Zeitstellsignal (ZS) ist durch die Mikroprozessoreinrichtung (MP) netzschutzsichernd ermittelt,
1.4 das Betriebszustandssignal (BS) ist von der Mikroprozessoreinrichtung (MP) netzzustandsabhängig ermittelt.
**gekennzeichnet durch** die Merkmale
2.1 das Zeitstellsignal (ZS) und das Betriebszustandssignal (BS) werden von der jeweiligen Datenanzeige- und -auswerteeinrichtung (DA) alphanumerisch angezeigt,
2.2 das Zeitstellsignal (ZS) und das Betriebszustandssignal (BS) werden von der jeweiligen Datenanzeige- und -auswerteeinrichtung (DA) voneinander getrennt abgebildet.

2. Elektronische Übertrom-Auslöseeinrichtungen nach Patentanspruch 1
**gekennzeichnet durch** die Merkmale
3.1 die Datenanzeige- und -auswerteeinrichtungen (DA) sind über einen Datenbus ansteuerbar,
3.2 die Überstrom-Auslöseeinrichtungen (UA) sind über den Datenbus ansteuerbar.

## Claims

1. Electronic overcurrent trip devices for power supply and distribution, in particular for low-voltage and medium-voltage switchgear assemblies, with operating state identification devices for controlling the delayed and the undelayed short-circuit protection and for controlling the overload protection, wherein
1.1 the overcurrent trip devices (UA) are each equipped with a data display and evaluation device (DA),
1.2 the data display and evaluation device (DA) is under the control influence of the respective operating state identification device (BE) such that a timing signal (ZS) and an operating state signal (BS) can be transmitted to the respective data display and evaluation device (DA) by means of a microprocessor device (MP) by means of a measurement signal (MS) derived from the loading of the respective power supply system,
1.3 the timing signal (ZS) is determined by the microprocessor device (MP) in a manner which ensures protection of the power supply system,
1.4 the operating state signal (BS) is determined by the microprocessor device (MP) in a manner which is dependent on the power supply system state,
**characterized by** the following features:
2.1 the timing signal (ZS) and the operating state signal (BS) are displayed alphanumerically by the respective data display and evaluation device (DA),
2.2 the timing signal (ZS) and the operating state signal (BS) are depicted separately from one another by the respective data display and evaluation device (DA).

2. Electronic overcurrent trip devices according to Claim 1, **characterized by** the following features:
3.1 the data display and evaluation devices (DA) can be driven by a data bus,
3.2 the overcurrent trip devices (UA) can be driven via the data bus.

## Revendications

1. Dispositif électronique de déclenchement contre les surintensités pour l'alimentation et la distribution d'électricité, notamment pour des installations de distribution en basse tension et en moyenne tension, comprenant des dispositifs de détection de l'état de fonctionnement pour la commande de la protection vis à vis des court-circuits retardée et non retardée, ainsi que pour la commande de la protection en cas de surcharge, dans lequel
1.1 les dispositifs ( UA ) de déclenchement contre les surintensités sont équipées respectivement d'un dispositif ( DA ) d'indication de données et d'exploitation de données,
1.2 le dispositif ( DA ) d'indication de données et d'exploitation de données est sous l'influence de commande du dispositif ( BE ) de détection de l'état de fonctionnement respectif, de manière à ce que, au moyen d'un signal ( MS ) de mesure, dérivé de la charge du réseau d'alimentation électrique respectif, un signal ( ZS ) de réglage dans le temps et un signal ( BS ) d'état de fonctionnement peuvent être transmis au moyen d'un dispositif ( MP ) de microprocesseur au dispositif ( DA ) respectif d'indication de données et d'exploitation de données,
1.3 le signal ( ZS ) de réglage dans le temps est déterminé d'une manière assurant la protection du réseau par le dispositif ( MP ) de microprocesseur,
1.4 le signal ( BS ) d'état de fonctionnement est déterminé indépendamment de l'état du réseau par le dispositif ( MP ) de microprocesseur,
**caractérisé par** les caractéristiques
2.1 le signal ( ZS ) de réglage dans le temps et le signal ( BS ) d'état de fonctionnement sont indiqués d'une manière alphanumérique par le dispositif ( BA ) respectif d'indication de données et d'exploitation de données,
2.2 le signal ( ZS ) de réglage dans le temps et le signal ( BS ) d'état de fonctionnement sont formés séparément l'un de l'autre par le dispositif ( DA ) respectif d'indication de données et d'exploitation de données.

2. Dispositif électronique de déclenchement contre les surintensités suivant la revendications 1,
**caractérisé par** les caractéristiques
3.1 les dispositifs ( DA ) d'indication de données et d'exploitation de données peuvent être commandés par un bus de données,
3.2 les dispositifs ( UA ) de déclenchement contre les surintensités peuvent être commandés par le bus de données.
